# EUROPEAN PATENT APPLICATION

(11) **EP 2 053 778 A1**
(43) Date of publication of application: **29.04.2009**
(21) Application number: 07020616.4
(22) Date of filing: 22.10.2007
(51) Int. Cl.: H04L 12/10, H04M 11/06

(54) **Method and system for remote power feeding of a DSL communication device**

(71) Applicant: Koninklijke KPN N.V., 2516 CK The Hague (NL)
(72) Inventor: Herrera van der Nood, José Manuel, 3225 EC Hellevoetsluis (NL)
(74) Representative: Wuyts, Koenraad Maria

(57) **Abstract**

The invention relates to a method and system of remote power feeding of a DSL communication device. The system for performing the method comprises a central DSL system connectable to a plurality of DSL communication devices via a plurality of associated subscriber lines. A subscriber line provides a plurality of communication channels for signal transmission between the central DSL system and the DSL communication device. The method involves receiving a power failure indication signal from the at least one DSL communication device. Following the transmission of the power failure indication signal, one or more communication channels are selected from the plurality of communication channels for signal transmission over the subscriber line. Then, power is fed to the at least one DSL communication device in combination with signal transmission over said selected one or more communication channels of the subscriber line.

## Description

### FIELD OF THE INVENTION

The invention relates to a method and system for remote power feeding of an electronic device. In particular, the invention relates to a method and system for remote power feeding of a digital subscriber line (DSL) communication device.

### BACKGROUND OF THE INVENTION

With the wide use of digital switching systems, an increasing number of DSL network termination devices for operating DSL services are installed at subscriber sites. The DSL technology dramatically increases the digital capacity of ordinary subscriber lines at the subscriber site, that is, home or office. DSL collectively refers to a group of technologies that utilize the unused bandwidth in the existing copper access network to deliver high-speed data services from the distribution center, or central office, to the end user. DSL technology is attractive because it requires little to no upgrading of the existing copper infrastructure that connects nearly all populated locations in the world. In addition, DSL is inherently secure due to its point-to-point nature. DSL includes three types of usage: Asymmetric DSL (ADSL) and Symmetric DSL (SDSL or HDSL) and Very high rate DSL (VDSL).

Subscribers, consumers and companies alike, increasingly rely on the availability of DSL communication. Power failure, however, in principle inhibits the use of DSL communication devices. With the liberalisation of the market for electric power supply, chances of power failure appear to have been increased.

Attempts have been made to provide alternative power feeding methods. Conventionally, large-capacity batteries or capacitors have been applied with DSL communication devices as back-up power sources in the event of a power failure. However, the battery or capacitor can only provide power to the DSL communication device for a limited time period.

More recently, a remote power feed method and system has been disclosed in United States Patent US 6,847,718. The method and system allow remote power feeding into a network termination device in the event of a commercial power failure at a subscriber site. When the commercial power failure occurs, a power failure signal is transmitted from the subscriber-side network termination device to the central office-side line termination device. The central office-side line termination device, when receiving the power failure signal, starts DC power feeding to the subscriber-side network termination device via the subscriber line. During the power failure, only voice communication is permitted using channels selected as "good" during the period in advance of the commercial power failure.

Most subscribers, however, also desire non-voice communication in the event of a power failure. Moreover, the method and system according to the prior art are relatively inefficient.

### SUMMARY OF THE INVENTION

It is an object of the invention to provide an improved method and system for remote power feeding.

To that end, a method of remote power feeding of a DSL communication device is proposed. The system for performing the method comprises a central DSL system connectable to a plurality of DSL communication devices via a plurality of associated subscriber lines. A subscriber line provides a plurality of communication channels for signal transmission between the central DSL system and the DSL communication device. The method involves receiving a power failure indication signal from the at least one DSL communication device. Following the transmission of the power failure indication signal, one or more communication channels are selected from the plurality of communication channels for signal transmission over the subscriber line. Then, power is fed to the at least one DSL communication device in combination with signal transmission over said selected one or more communication channels of the subscriber line.

Furthermore, a system is proposed comprising a central DSL system and a plurality of DSL communication devices connected to said central DSL system via a plurality of associated subscriber lines. At least one of the DSL communication devices is adapted for transmitting a power failure indication signal to said central DSL system. The central DSL system is adapted for feeding power to said at least one DSL communication device in combination with signal transmission over one or more communication channels of the subscriber line. The system (e.g. the central DSL system and/or the DSL communication device) is arranged for selecting said one or more communication channels following the transmission of said power failure indication signal.

Furthermore, a central DSL system is proposed that is adapted to be connected to a plurality of DSL communication devices via a plurality of associated subscriber lines. At least one of said DSL communication devices is adapted for transmitting a power failure indication signal. The central DSL system comprises a receiver arranged to receive a power failure indication signal from at least one of said DSL communication devices and a communication channel selector adapted to select one or more communication channels following the receipt of said power failure indication signal. A power feeder of the central DSL system is arranged to feed power to said at least one DSL communication device from which said power failure indication signal was received in combination with signal transmission over one or more communication channels of the subscriber line.

Finally, a DSL communication device is proposed that is adapted to be connected to a central DSL system via a subscriber line for signal exchange over one or more communication channels. The DSL communication device comprises a power supply monitor for monitoring supply of commercial power for said DSL communication device and to indicate power failure and a power failure indication signal transmitter adapted to transmit a power failure indication signal in response to a power failure. A communication channel selector is adapted to select one or more communication channels following the transmission of said power failure indication signal for signal exchange between said central DSL system and said DSL communication device. The DSL communication device also comprises a receiver adapted to receive power from said central DSL system in combination with signal exchange over one or more communication channels of the subscriber line.

The applicant has found that the signal spectrum in the subscriber lines is more clean after a power failure than during normal operation as a result of the reduction of cross talk when devices are no longer able to transmit data over the subscriber lines (especially when a power failure affects more than one DSL communication device). This effect is particularly true for the upstream transmission path, i.e. from the DSL communication device to the central DSL system. Therefore, and in contrast with the prior art, the communication channels for signal exchange between the central DSL system and the DSL communication device are determined only after power failure.

This approach has several advantages. First, it is likely that more suitable communication channels available for communication are identified after power failure as a result of the more clean signal spectrum. Therefore, the DSL communication device may be assigned more communication channels of the subscriber line and thereby the data rate and the chance of availability of voice communication and data communication after power failure are increased. Furthermore, it is not necessary during normal operation to monitor the most suitable communication channels and to transmit this information between the central DSL system and the DSL communication device on a continuous basis, thereby increasing the efficiency.

The proposal is particularly useful when commercial power failures affect complete areas housing several DSL communication devices.

It should be appreciated that the number of selected communication channels may vary, e.g. in dependence on the amount of data to be transferred over the subscriber line.

Of course, if the operation of other user equipment for the DSL communication is also dependent on commercial power supply, the power feed from the central DSL system may not be sufficient. However, DSL communication devices often include mobile devices (laptops, mobile phones, Personal Digital Assistants) capable of operating on mobile power supplies (e.g. batteries) and for these device, the DSL communication device being powered from the central DSL system may be capable of DSL communication with the central DSL system.

The method and system as defined in the embodiment of claims 2 and 9 provide for a preventive mode, wherein DSL communication devices that are expected to be out of power, are provided with power from the central DSL system in advance, i.e. without having received a power failure indication signal from these DSL communication devices. This enables a user of a suitable DSL communication device to start using the DSL service during a power failure immediately.

The method and system as defined in the embodiment of claims 3 and 10 provide for a sleep mode, wherein communication with further DSL communication devices is aborted after having received a power failure indication signal from one or more DSL communication devices. Conventional DSL communication devices will no longer be able to communicate with the central DSL system as a direct consequence of the power failure. The DSL communication devices arranged according to an embodiment of the invention will attempt to reconnect by sending a power failure indication signal. Since only these DSL communication devices will be able to reconnect, the signal spectrum experienced by these DSL communication devices will be much cleaner and accordingly, the performance of these DSL communication devices will be improved.

The method and system as defined in the embodiments of claims 4 and 10 prevent that power is fed to further DSL communication device and/or further DSL communication devices are disconnected as a result of only a single and/or a few power failure indication signal(s).

The DSL communication devices to be expected to be in the same out-of-power situation as the DSL communication device from which the power failure indication signal was received can be determined as belonging a predetermined group of DSL communication devices, one DSL communication device of that group being the device that issued the power failure indication signal. A group may typically comprise between 100 and 2000 DSL communication devices.

The maintained or re-established DSL connection can advantageously be used for transmitting information, such as information relating to the cause of the power failure and/or possible emergency information, as defined in claim 5 and 12.

The use of the maintained DSL connection for data transmission is defined in claim 6.

The selected communication channels may include carrier waves with a frequency in the range of 0-25 kHz. In the absence of telephony signals, the low frequency range may be used for data transmission at a relatively high speed. The embodiment is defined in claim 7 and 13.

The DSL communication device as defined in the embodiment of claim 16 enables that the device can run operations such as transmitting the power failure indication signal and, if necessary, select the communication channels after power failure.

Embodiments of the invention will hereinafter be described with reference to the attached drawings. It should be appreciated that these embodiments should not be construed as limiting the scope of protection of the invention.

### BRIEF DESCRIPTION OF THE DRAWINGS

In the drawings:
FIG. 1 shows a system according to an embodiment of the invention;
FIG. 2 shows a schematic illustration of a central DSL system and a DSL communication device in accordance with an embodiment of the invention, and
FIG. 3 shows a flow chart illustrating steps of a method according to an embodiment of the invention.

### DETAILED DESCRIPTION OF THE DRAWINGS

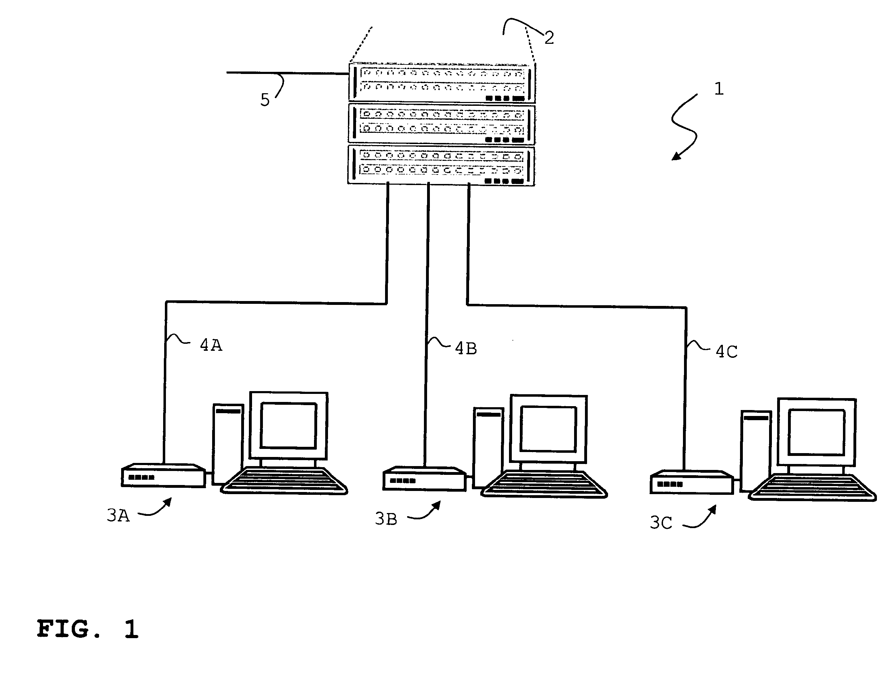

FIG. 1 shows a system 1 for DSL signal exchange comprising a central DSL system 2 and a plurality of DSL communication devices 3A, 3B and 3C connected to the central DSL system via associated subscriber lines 4A, 4B and 4C respectively. Each DSL communication device 3A, 3B, 3C contains a modem in FIG. 1. The modems may be connected to or implemented in personal computers, mobile device, including voice-over-IP devices, etc. It should be appreciated that in practice, the central DSL system may be connected to more DSL communication devices, such as 100-2000 DSL communication devices. The connection 5 indicates the ability of the central DSL system to connect to further communication systems or networks, such as a wide-area network (WAN). The system 1 is capable of handling both voice communications and data communications.

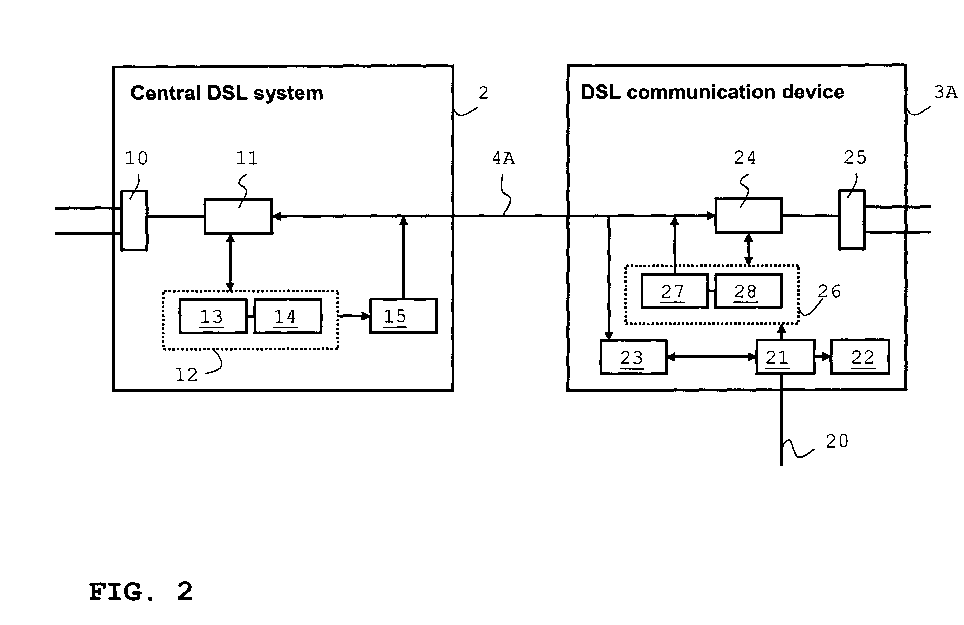

FIG. 2 provides a schematic illustration of the central DSL system 2 and a DSL communication device 3A in accordance with an embodiment of the invention. The DSL communication devices 3B and 3C may or may not have a similar arrangement. The central DSL system 2, often referred to as DSLAM, comprises a multiplexer/demultiplexer 10 to combine respectively separate voice and data packets and a termination circuit 11 performing, amongst others, predetermined modulation of the signal. The modulation/demodulation may e.g. be Discrete Multitone (DMT) and Quadrature Amplitude Modulation (QAM). The DMT line code, as defined in ANSI T1.413-1998, divides the useful bandwidth of the standard two wire copper medium used in the PSTN, which is 0 to 1104kHz, into 256 separate 4.3125kHz wide bins called sub-carriers. Each sub-carrier is associated with a discrete frequency, or tone, indicated by 4.3125kHz * n, where n = 1 to 256, and is essentially a single distinct communication channel.

The central DSL system further contains a control module 12 comprising a receiver 13 arranged for receiving a power failure indication signal from the DSL communication device 3A and a channel selector 14 for selection appropriate communication channels in the subscriber line 4A in response to receiving the power failure indication signal. Furthermore, the central DSL system 2 contains a power feeder 15 arranged to feed power to the DSL communication device 3A in combination with signal transmission over the communication channels of the subscriber line 4A.

The DSL communication device 3A is normally powered from a commercial power source via line 20. A power supply monitor 21 monitors the power supply status of the DSL communication device 3A. The DSL communication device 3A contains a back-up power source 22 to temporarily supply power to the DSL communication device 3A in case of commercial power failure. The DSL communication device 3A also contains a power receiver 23 for receiving and extracting power from the central DSL system 2 and to power the DSL communication device as will be described below in further detail.

The DSL communication device 3A contains a termination module 24 and a multiplexer/demultiplexer 25 performing the same functions as the multiplexer/demultiplexer 10 and the termination circuit 11 on the side of the central DSL system 2. The output of the multiplexer/demultiplexer 25 may be directed to a personal computer or another device, such as a voice-over-IP telephone.

The DSL communication device 3A also has a controller 26 containing a power failure indication signal transmitter 27 and a communication channel selector 28 adapted to select suitable communication channels over the subscriber line 4A with the central DSL system 2 after having transmitted the power failure indication signal.

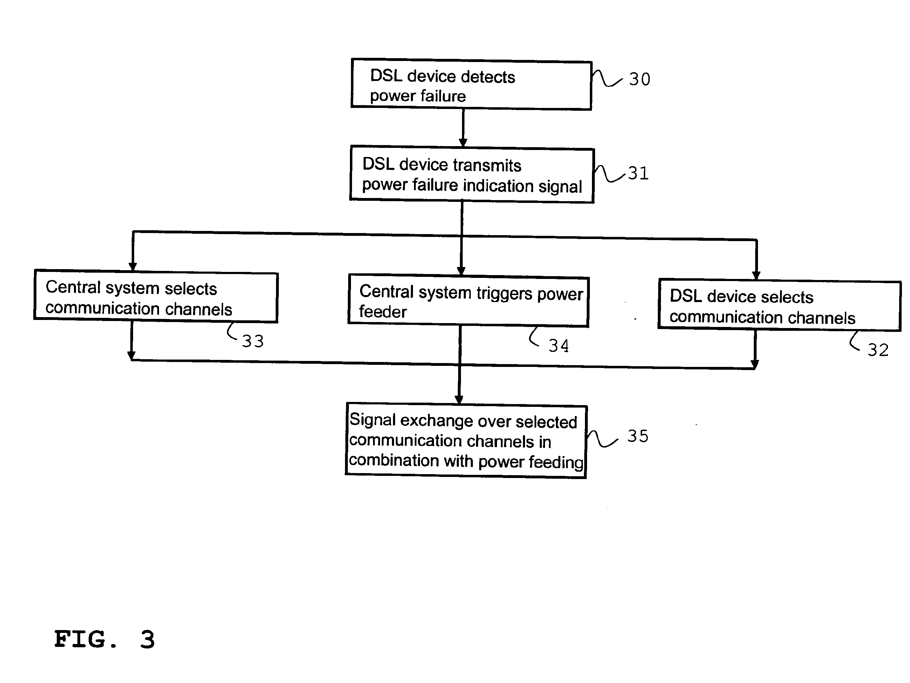

The operation of the DSL communication device 3A and the central DSL system 2 will now be described in further detail. Some of the operational steps are illustrated in the flow chart of FIG. 3.

In the normal situation, the central DSL system 2 and the DSL communication devices 3A, 3B and 3C are capable of DSL signal exchange over the subscriber lines 4A, 4B and 4C, respectively. The communication device 3A is powered from a commercial power source over power line 20. The DSL signal exchange takes place over communication channels selected during training at the central DSL system side (for the upstream carriers) and/or at the DSL communication device side (for the downstream carriers).

In step 30, the power supply monitor 21 of the DSL communication device detects failure of the commercial power supply. The power supply monitor 21 instructs the back-up power supply 22 to take over the power supply for the DSL communication device 3A.

Moreover, the power supply monitor 21 instructs the power failure indication signal transmitter 27 of the controller 26 of the DSL communication device 3A to transmit a power failure indication signal over the subscriber line 4A to the central DSL system 2. Furthermore, the communication channel selector 28 selects suitable communication channels existing after the power failure on the subscriber line 4A for DSL communication, in particular the downstream channels, as indicated in step 32.

The power failure indication signal transmitted from the DSL communication device 3A is received by the receiver 13 of the central DSL system. In response to receiving the power failure indication signal, the channel selector 14 selects appropriate communication channels existing after the power failure on the subscriber line 4A for DSL communication, in particular the upstream channels, as indicated in step 33.

Furthermore, the power failure indication signal of the DSL communication device 3A also triggers the power feeder 15 to provide power to this communication device, as indicated in step 34. The power provided in this manner may be sufficient for low(er) speed communication over the subscriber line 4A.

It should be appreciated that steps 32, 33 and 34 may or may not be performed simultaneously. Also, it is not required that both the central DSL system 2 and the DSL communication device 3A perform channel selection.

In step 35, DSL signal exchange is maintained or re-established over the subscriber line 4A using the selected communication channels and in combination with feeding power from the central DSL system 2 to the DSL communication device 3A usin this subscriber line 4A.

FIG. 3 only illustrates some steps of a method for remote power feeding according to an embodiment of the invention. Further steps or alternative steps have been contemplated.

If commercial power is restored, the power supply monitor 21 may instruct the receiver 23 that power extracting from the signal of the central DSL system 2 is no longer necessary. The controller 26 communicates the power restoration to the central DSL system 2, such that the DSL signal from the central DSL system 2 will no longer contain a power supplement.

Upon receipt of the power failure indication signal from the DSL communication device 3A, the central DSL system 2 may decide to also provide DSL communication device 3B with a combined DSL signal and power feed, although DSL communication device 3B did not transmit a power failure indication signal itself. Power is fed to the DSL communication device 3B under the assumption that this device 3B suffers from a power failure as well and that device 3B has a similar arrangement as DSL communication device 3A, illustrated in FIG. 2. This prevention mode allows the user of the device 3B to start using the DSL communication device 3B immediately.

If a power failure indication signal is received from DSL communication device 3A, the central DSL system may disconnect DSL communication device 3C, since DSL communication device 3C is not capable of operating during a significant period of commercial power failure. By actively disconnecting DSL communication device 3C ("sleep mode"), a cleaner DSL signal spectrum may be obtained for DSL signal exchange for DSL communication devices 3A and 3B and more and/or better communication channels may be selected for these DSL communication devices 3A, 3B.

The applicant has realized that a DSL communication device 3A, 3B, 3C may run out of commercial power for a variety of reasons, including reasons that would not influence the power supply of other DSL communication devices. Therefore, the central DSL system 2 may enter the preventive mode and/or the sleep mode if, e.g. the number of power failure indication signals received from different DSL communication devices exceeds a predetermined threshold of, e.g., 3, 5 or 10 power failure indication signals.

Another step may be that the central DSL system 2 is arranged to push a power failure information message to the DSL communication device 3A. The information message may inform the user of the DSL communication device 3A of the cause of the commercial power failure, provide indications when commercial power will be restored, provide advice to the user and/or indicates possible emergency situations for the user. This particular feature of an information message makes the embodiment of the invention using this information message suitable for various types of emergency systems.

It is noted that, if commercial power is not available for the DSL communication device 3A and in contrast with the prior art, data communication is still possible between the central DSL system 2 and the DSL communication device 3A. In particular, if voice-over-IP telephony is used for voice communication, the selected channels may include carrier waves with a frequency in the range of 0-25 kHz providing high speed communication channels.

## Claims

1. A method of remote power feeding of a DSL communication device in a system comprising a central DSL system connectable to a plurality of DSL communication devices via a plurality of associated subscriber lines, a subscriber line providing a plurality of communication channels for signal transmission between the central DSL system and the DSL communication device, the method comprising the steps of:
- transmitting a power failure indication signal from said at least one DSL communication device;
- selecting, following the transmission by the DSL communication device of said power failure indication signal, one or more communication channels from said plurality of communication channels for signal transmission over the subscriber line; and
- feeding power to said at least one DSL communication device in combination with signal exchange over said selected one or more communication channels of the subscriber line.

2. The method according to claim 1, further comprising the steps of:
- receiving said power failure indication signal from said at least one DSL communication device at said central DSL system;
- in response to receiving said power failure indication signal, feeding power from said central DSL system over further subscriber lines to further associated DSL communication devices without having received a power failure indication signal from these further DSL communication devices.

3. The method according to claim 1, further comprising the steps of:
- receiving said power failure indication signal from said at least one DSL communication device at said central DSL system;
- in response to receiving said power failure indication signal, disconnecting further subscriber lines from said central DSL system corresponding to further associated DSL communication devices without having received a power failure indication signal from these further DSL communication devices.

4. The method according to claim 2 or 3, wherein said step of feeding power over said further subscriber lines of disconnecting said further subscriber lines is performed if a number of power failure indication signals is above a predetermined threshold.

5. The method according to one or more of the preceding claims, wherein a power failure information message is transmitted from said central DSL system over said subscriber line to said at least one DSL communication device.

6. The method according to one or more of the preceding claims, wherein said signal transmission comprises data transmission.

7. The method according to one or more of the preceding claims, wherein said selected channels include carrier waves with a frequency in the range of 0-25 kHz.

8. A system comprising a central DSL system and a plurality of DSL communication devices connectable to said central DSL system via a plurality of associated subscriber lines, wherein at least one of said DSL communication devices is adapted for transmitting a power failure indication signal and wherein said central DSL system is adapted for feeding power to said at least one DSL communication device in combination with signal exchange over one or more communication channels of the subscriber line and wherein said system is arranged for selecting said one or more communication channels following the transmission of said power failure indication signal.

9. The system according to claim 8, wherein said central DSL system is arranged for receiving said power failure indication signal from said at least one DSL communication device and said central DSL system, in response to receiving said power failure indication signal, is arranged for feeding power from said central DSL system over further subscriber lines to further associated DSL communication devices without having received a power failure indication signal from the further DSL communication devices.

10. The system according to claim 8, wherein said central DSL system is arranged for receiving said power failure indication signal from said at least one DSL communication device and said central DSL system, in response to receiving said power failure indication signal, is arranged for disconnecting further subscriber lines from said central DSL system corresponding to further associated DSL communication devices without having received a power failure indication signal from these further DSL communication devices.

11. The system according to claim 9 or 10, wherein said central DSL system is adapted to feed power over said further subscriber lines or to disconnect said further subscriber lines if a number of received power failure indication signals is above a predetermined threshold.

12. The system according to one or more of the claims 7-11, wherein said central DSL system is adapted for transmitting a power failure information message over said subscriber line to said at least one DSL communication device.

13. The system according to one or more of the claims 7-12, wherein said system is arranged for data transmission using carrier waves for said communication channels in the range of 0-25 kHz.

14. A central DSL system adapted to be connected to a plurality of DSL communication devices via a plurality of associated subscriber lines, wherein at least one of said DSL communication devices is adapted for transmitting a power failure indication signal, wherein said central DSL system comprises:
- a receiver arranged to receive a power failure indication signal from at least one of said DSL communication devices;
- a communication channel selector adapted to select one or more communication channels following the receipt of said power failure indication signal; and
- a power feeder arranged to feed power to said at least one DSL communication device from which said power failure indication signal was received in combination with signal exchange over one or more selected communication channels of the subscriber line.

15. A DSL communication device adapted to be connected to a central DSL system via a subscriber line for signal exchange over one or more communication channels, wherein said DSL communication device comprises:
- a power supply monitor for monitoring supply of commercial power for said DSL communication device and to indicate power failure
- a power failure indication signal transmitter adapted to transmit a power failure indication signal in response to a power failure
- a communication channel selector adapted to select one or more communication channels following the transmission of said power failure indication signal for signal exchange between said central DSL system and said DSL communication device;
- a receiver adapted to receive power from said central DSL system in combination with signal exchange over one or more selected communication channels of the subscriber line.

16. The DSL communication device, wherein said device further comprises a temporary power source for providing power immediately after power failure.
